# EUROPÄISCHE PATENTSCHRIFT

(11) **EP 2 285 559 B1**
(45) Veröffentlichungstag und Bekanntmachung des Hinweises auf die Patenterteilung: **17.06.2015**
(21) Anmeldenummer: 09732144.2
(22) Anmeldetag: 20.02.2009
(51) Int. Cl.: B32B 3/12, B32B 3/28, B32B 38/10, B32B 7/08

(54) **VERFAHREN ZUR HERSTELLUNG EINES BEIDSEITIG MIT DECKSCHICHTEN VERSEHENEN KERNVERBUNDES SOWIE KERNVERBUND**
METHOD FOR PRODUCING A CORE COMPOSITE WITH DOUBLE-SIDED SURFACE LAYERS AND CORE COMPOSITE
PROCEDE DE FABRICATION D'UNE STRUCTURE SANDWICH POURVUE DE COUCHES DE RECOUVREMENT SUR LES DEUX COTES ET STRUCTURE SANDWICH

(30) Priorität: 15.04.2008 DE 102008019065
(43) Veröffentlichungstag der Anmeldung: 23.02.2011
(73) Patentinhaber: Airbus Operations GmbH, 21129 Hamburg (DE)
(72) Erfinder: KOLAX, Michael, 21147 Hamburg (DE); DOLZINSKI, Wolf-Dietrich, 27777 Ganderkeese (DE)
(74) Vertreter: UEXKÜLL & STOLBERG
(86) Internationale Anmeldenummer: PCT/EP2009/052034
(87) Internationale Veröffentlichungsnummer: WO 2009/127461

(56) Entgegenhaltungen:
- AU-A1- 2003 264 650
- DE-A1- 10 146 201
- DE-A1-102004 013 145
- DE-A1-102006 050 823
- US-A- 3 996 084

## Beschreibung

Die Erfindung betrifft ein Verfahren zur Herstellung eines Kernverbundes mit einem beidseitig mit Deckschichten versehenen Faltwabenkern, wobei der Faltwabenkern eine Vielzahl parallel zu den Deckschichten verlaufende drainagefähige Kanäle aufweist.

Bauteile, die in Sandwichbauweise bzw. als Kernverbund ausgebildet sind, verfügen über sehr hohe mechanische Festigkeiten bei einem zugleich sehr geringen Gewicht. Daher werden Sandwichplatten beispielsweise für die Innenverkleidung von Passagierkabinen oder als Bodenplatten auf einem Fußbodengerüst in Passagierflugzeugen eingesetzt. Sandwichplatten werden beispielsweise mit einem honigwabenförmigen Kern gebildet, auf den beidseitig Deckschichten aufgebracht sind. Sandwichbauteile mit einem honigwabenförmig ausgestalteten Kern sind jedoch, insbesondere wegen der infolge der geschlossenzelligen Struktur der Honigwaben nicht gegebenen Drainagefähigkeit für großformatige Bauteile ungeeignet. Abhilfe kann durch die Verwendung von so genannten Faltwabenkernen erfolgen, die eine Vielzahl von parallel nebeneinander verlaufenden, durchgehenden Kanälen aufweisen und die deswegen in der Lage sind, in den Faltwabenkern eingedrungenes oder entstandenes Kondenswasser wieder nach außen abzuleiten.

Das Dokument DE 10 2004 013 145 offenbart ein Verfahren zur Herstellung eines Kernverbundes mit einem beidseitig mit Deckschichten versehenen Faltwabenkern, wobei der Faltwabenkern eine Vielzahl von parallel zu den Deckschichten verlaufende drainagefähige Kanäle aufweist, mit den Schritten:
- Zumindest bereichsweises Einbringen einer Kernfüllmasse in den mindestens einen Faltwabenkern,
- Anordnen einer unteren und einer oberen trockenen Deckschicht auf den Faltwabenkern,
- Aushärten des gesamten Kernverbundes unter Anwendung von Druck und/oder Temperatur.

Ein Problem, das jedoch beiden Varianten von Sandwichbauteilen anhaftet, ist deren geringe Schadenstoleranz. Hierunter wird die Gefahr verstanden, dass sich die Deckschichten in bestimmten Lastsituationen von der Kernstruktur zumindest bereichsweise ablösen können und dieser Delaminationsprozess bei anhaltender Belastung zudem die Neigung zeigt, stetig fortzuschreiten. Durch derartige Delaminationen verschlechtert sich die strukturelle Festigkeit eines Kernverbundes schlagartig, was in der Regel zum sofortigen Versagen des betroffenen Bauteils führt. Dieser zuletzt genannte Umstand ist der entscheidende Grund dafür, dass die im Hinblick auf ihre mechanischen Eigenschaften idealen Sandwichbauteile mit Faltwabenkernen, wobei in diesem Zusammenhang insbesondere das gute Festigkeits-Gewichts-Verhältnis zu erwähnen ist, zurzeit nicht in nennenswertem Umfang in der Primärstruktur von Großflugzeugen anzutreffen sind.

Aufgabe der Erfindung ist es daher, ein Verfahren zur Herstellung eines Kernverbundes mit einem drainagefähigen Faltwabenkern zu schaffen, bei dem eine insbesondere fortschreitende Ablösung der Deckschichten ausgeschlossen ist.

Diese Aufgabe wird erfindungsgemäß durch ein Verfahren mit den Merkmalen des Patentanspruchs 1 sowie durch einen Kernverbund mit einem beidseitig mit Deckschichten versehenen Faltwabenkern nach Patentanspruch 11 gelöst. Bevorzugte Ausführungsformen sind Gegenstand der jeweiligen Unteransprüche.

Das erfindungsgemäße Verfahren weist die folgenden Schritte auf:
a) Zumindest bereichsweises Einbringen einer Kernfüllmasse in den mindestens einen Faltwabenkern,
b) Anordnen einer unteren und oberen trockenen Deckschicht auf den Faltwabenkern,
c) zumindest bereichsweises mechanisches Anbinden der Deckschichten an den Faltwabenkern,
d) Infusion der Deckschichten mit einem aushärtbaren Kunststoffmaterial,
e) Aushärten des gesamten Kernverbundes unter Anwendung von Druck und/oder Temperatur, und
f) Entfernen der Kernfüllmasse.

Infolge der im Verfahrensschritt c) erfolgenden mechanischen Anbindung der beiden Deckschichten an den Faltwabenkern ist insbesondere eine fortschreitende bereichsweise Delamination der Deckschichten unter allen auftretenden Betriebszuständen des Flugzeugs sicher ausgeschlossen. Demzufolge ist ein mittels des erfindungsgemäßen Verfahrens hergestellter Kernverbund mit einem Faltwabenkern erstmals uneingeschränkt für die Verwendung in der Primärstruktur eines Flugzeugs geeignet.

Im Zuge des erfindungsgemäßen Verfahrens wird zunächst im Schritt a) eine Kernfüllmasse zumindest bereichsweise in den mindestens einen Faltwabenkern des späteren Kernverbundes eingebracht. Das Einbringen der Kernfüllmasse dient zur mechanischen Stabilisierung des Faltwabenkerns für die später erfolgende mechanische Anbindung der Deckschichten an die Kernstruktur. Bei der Kernfüllmasse handelt es sich um ein aushärtbares Material, das nach Fertigstellung des Kernverbundes durch ein geeignetes Lösungsmittel oder die Anwendung von Temperatur wieder rückstandslos aus diesem entfernt werden kann. Als Kernfüllmasse kann beispielsweise das Material "AquaCore^{®}" eingesetzt werden, das in Wasser löslich ist und somit rückstandsfrei aus dem Inneren des Kernverbundes herausspülbar ist. Alternativ können auch niedrigschmelzende Wachse oder Metalllegierungen als Kernfüllmasse eingesetzt werden.

Im anschließenden Verfahrensschritt b) wird eine untere und eine obere jeweils "trockene" Deckschicht auf dem Faltwabenkern platziert. Die Deckschichten sind mit bekannten Verstärkungsfaseranordnungen, beispielsweise einem Kohlefasergewebe oder einem Kohlefasergelege gebildet, wobei der Terminus "trocken" auf die noch nicht erfolgte Infusion mit einem aushärtbaren Kunststoffmaterial, wie zum Beispiel einem Epoxidharz, einem Polyesterharz, einem Phenolharz oder einem BMI-Harz hindeutet. Im Gegensatz hierzu ist der Faltwabenkern mit einer Verstärkungsfaseranordnung gebildet, die bereits mit einem ausgehärteten Kunststoffmaterial imprägniert ist. Ein geeignetes Material für den Faltwabenkern ist beispielsweise das so genannte Nomex^{®}-Papier oder eine mit einem Epoxidharz imprägnierte und anschließend ausgehärtete Kohlefaserverstärkungsanordnung.

In diesem Stadium erfolgt weiterhin eine Anpassung an eine vorgegebene Sollgeometrie des herzustellenden Kernverbundbauteils.

Im Verfahrensschritt c) erfolgt die mechanische Anbindung der Deckschichten an den Faltwabenkern. Hierdurch wird im Vergleich zu der bisher üblichen, rein adhäsiven Anbindung eine wesentlich höhere Sicherheit gegenüber einer bereichsweise fortschreitenden Delamination der Deckschichten vom Faltwabenkern erzielt. Die erfindungsgemäß gefertigten Kernverbunde verfügen somit über eine hohe Schadenstoleranz, die einen problemlosen Einsatz auch in der Primärstruktur von großen Passagierflugzeugen zulässt. Ergänzend kann zumindest abschnittsweise eine zusätzliche Verklebung des Faltwabenkerns mit mindestens einer der beiden Deckschichten vorgesehen sein. Die mechanische Anbindung der unteren und der oberen Deckschicht kann zugleich oder nacheinander erfolgen.

Im sich anschließenden Verfahrensschritt d) erfolgt eine Infusion der beiden Deckschichten mit einem geeigneten aushärtbaren Kunststoffmaterial. Um eine möglichst vollständige und gleichmäßige Imprägnierung beider Deckschichten unter Vermeidung von Lufteinschlüssen und sonstigen unerwünschten Kavitäten zu erreichen, kann es erforderlich sein, den Gesamtaufbau zumindest bereichsweise mit einer Folie zu bedecken und den Infusionsvorgang durch das Anlegen von Vakuum zu intensivieren.

Im nachfolgenden Verfahrensschritt e) erfolgt die Aushärtung des fertig gestellten Kernverbundes unter Anwendung von Druck und/oder Temperatur, wobei dieser Prozessschritt zum Beispiel in einem Ofen oder einem Autoklaven erfolgt.

In einem abschließenden Verfahrensschritt f) wird die Kernfüllmasse aus dem Kernverbund entfernt. Die rückstandslose Entfernung der Kernfüllmasse kann in Abhängigkeit vom konkret eingesetzten Material beispielsweise durch Herausspülen oder Herausschmelzen erfolgen.

Nach einer vorteilhaften Weiterbildung des Verfahrens wird dem Kernverbund mittels mindestens eines geeigneten Werkzeugs vor dem mechanischen Anbinden der Deckschichten eine von einer ebenen Gestalt abweichende Geometrie verliehen. Hierdurch können beispielsweise einfach (zylindrisch) oder zweifach (sphärisch) gekrümmte Schalensegmente zur Herstellung von Rumpfsektionen für Flugzeuge verfahrensgemäß hergestellt werden. Eine Rumpfsektion wird durch das umfangsseitige Zusammenfügen mehrerer derartiger Schalensegmente jeweils unter Schaffung von Längsnähten hergestellt. Vorzugsweise kommen hierbei mindestens vier Schalensegmente zum Einsatz.

Nach einer weiteren Fortentwicklung des Verfahrens erfolgt die mechanische Anbindung der Deckschichten an den Faltwabenkern durch Vernähen. Hierdurch wird auf einfache Weise ein fester mechanischer Verbund zwischen den Deckschichten und dem Faltwabenkern erzielt. Eine flächendeckende Vernähung ist in der Regel nicht erforderlich. Um zumindest bereichsweise fortschreitende Delaminationen sicher zu unterbinden, ist in der Regel ein zumindest bereichsweises Vernähen ausreichend. Als "Nähfaden" werden bevorzugt Rovings aus demselben Material eingesetzt, die auch für die Deckschichten zur Anwendung kommen. Für den Fall, dass die Deckschichten beispielsweise mit einem Kohlefasergewebe oder einem Kohlefasergelege gebildet sind, wird als Nähfaden in vorteilhafter Weise mindestens ein Kohlefaserroving bzw. Kohlefaserstrang verwendet. Grundsätzlich kann jedoch jede hinreichend zugfeste Kunststofffaser bzw. jedes Kunststoffgarn oder jede Naturfaser als Nähfaden Verwendung finden. Zum Beispiel können als Nähfaden Kohlefaserrovings, Polyesterfäden, Aramid^{®}-Fäden oder Hanffäden benutzt werden. Da der Nähfaden die Deckschichten und den Faltwabenkern durchdringt, wird durch die abschließende Infusion der Deckschichten mit einem aushärtbaren Kunststoffmaterial der Nähfaden in seiner jeweiligen Lage gesichert.

Gemäß einer weiteren vorteilhaften Ausgestaltung des Verfahrens wird zumindest eine Deckschicht zumindest bereichsweise mit dem Faltwabenkern verklebt. Hierdurch kann eine zusätzliche Sicherheit gegen Delaminationen erreicht werden. Darüber hinaus wird die Lagefixierung des Nähfadens verbessert.

Nach einer Weiterentwicklung des Verfahrens erfolgt das Vernähen und/oder das Verkleben im Wesentlichen entlang von Basislinien und/oder von Scheitellinien des Faltwabenkerns. Hierdurch wird die Positionierung des zum Vernähen eingesetzten Nähkopfes erleichtert. Die Lagesteuerung des Nähkopfes kann beispielsweise durch eine im Bereich der Scheitellinien und/oder der Basislinien erhöhte elektrische Leitfähigkeit erfolgen. Diese lokale Leitfähigkeitserhöhung kann zum Beispiel durch das Bestreichen mit einer löslichen Leitpaste bewirkt werden, die vor dem Harzinfusionsprozess rückstandslos entfernt wird und die beispielsweise eine induktive Führung des Nähkopfes entlang der Basislinien und der Scheitellinien des Faltwabenkerns erlaubt. Alternativ kann der Verlauf der Kanäle auch in einer CNC-Steuerung abgelegt werden, mittels der der Nähkopf dann rechnergesteuert geführt wird.

Die durchgehenden, drainagefähigen Kanäle des Faltwabenkerns sind während der Durchführung des Nähvorgangs zumindest bereichsweise mit der Kernfüllmasse zur mechanischen Stabilisierung aufgefüllt. Ein frei im Raum positionierbarer Nähkopf dient zur Führung der Nadel und des Nähfadens. Als Nadel findet vorzugsweise eine Rundnadel Anwendung, um den Nähvorgang von einer Seite des Kernverbundes durchführen zu können. Mittels der Nadel erfolgt beispielsweise eine Penetration des Faltwabenkerns im Bereich der Scheitellinien bzw. der Basislinien und mindestens einer Deckschicht. Durch eine zusätzliche Verknotung des Nähfadens in sich selbst durch Schlingenbildung kann die Festigkeit der Naht weiter erhöht werden. Grundsätzlich können beide Deckschichten in einem Nähvorgang an den Faltwabenkern angebunden werden. Alternativ erfolgt erst das Vernähen der oberen Deckschicht und nach dem Wenden des Kernverbundes das Vernähen der unteren Deckschicht mit dem Faltwabenkern. Gegebenenfalls kann es erforderlich sein, vor dem Nähvorgang zur Fixierung der Lage der Deckschichten und/oder des Faltwabenkerns in Relation zueinander zusätzliche Befestigungsmittel (Nadeln, Klebepunkt, Klebebänder etc.) vorzusehen.

In einer Fortbildung des Verfahrens weist der Faltwabenkern im Bereich der Basislinien und/oder der Scheitellinien zumindest abschnittsweise Flansche auf, wobei die Flansche mit den Deckschichten vernäht werden. Hierdurch wird eine größere Verbindungsfläche zwischen dem Faltwabenkern und den Deckschichten und demzufolge eine höhere Belastbarkeit erreicht. Darüber hinaus ist es mittels der vorzugsweise beidseitig angeordneten Flansche möglich, die Naht auf beiden Seiten der Scheitellinie und/oder der Basislinien verlaufen zu lassen. Die Flansche werden vorzugsweise durch beidseitiges "Abkanten" einstückig gebildet und erstrecken sich beidseitig horizontal zu den Scheitellinien bzw. den Basislinien des Faltwabenkerns, jeweils parallel zur unteren bzw. oberen Deckschicht. Um einen Faltenwurf zu verhindern, kann es erforderlich sein, die Flansche im Fall von Faltwabenkernen mit trapezförmig, zickzackförmig oder sinusförmig verlaufenden Scheitel- und Basislinien bzw. durchgehenden Kanälen abschnittsweise mit einer Vielzahl von gleichmäßig zueinander beabstandeten Einschnitten zu versehen. Die Einschnitte sind im Fall der zickzackförmig bzw. trapezförmig verlaufenden Kanäle insbesondere im Bereich der Knickpunkte der Basislinien und der Scheitellinien (Richtungsänderung der betreffenden Linie) in die Flansche einzubringen.

In einer Weiterentwicklung des Verfahrens wird dem Kernverbund eine im Wesentlichen schalensegmentförmige Geometrie gegeben.

Die komplette Rumpfsektion wird dann durch das Zusammenfügen mehrerer, insbesondere mindestens vier, solcher Schalensegmente unter Bildung von in Längsrichtung verlaufenden Längsnähten vollzogen.

Nach einer weiteren vorteilhaften Ausgestaltung wird dem Kernverbund eine im Wesentlichen hohlzylindrische Geometrie verliehen. Hierdurch wird es möglich, eine komplette Rumpfsektion in integraler Bauweise mit dem erfindungsgemäßen Kernverbund mit Faltwabenkern herzustellen, so dass gewichtserhöhende Längsnähte, die beim Zusammenfügen einer Rumpfsektion aus mehreren Schalensegmenten entstehen, ersatzlos entfallen können.

Der erfindungsgemäße Kernverbund umfasst einen beidseitig mit Deckschichten versehenen Faltwabenkern, der parallel zu den Deckschichten verlaufende drainagefähige Kanäle aufweist.

Dadurch, dass die Deckschichten im Bereich von Scheitellinien und/oder von Basislinien zumindest abschnittsweise mit dem Faltwabenkern mechanisch verbunden, insbesondere vernäht, sind, ergibt sich eine hohe Schadenstoleranz eines mit dem erfindungsgemäßen Kernverbund aufgebauten Bauteils. Insbesondere werden fortschreitende Delaminationen der Deckschichten vom Faltwabenkern vermieden, so dass der Kernverbund uneingeschränkt zur Verwendung innerhalb der Primärstruktur eines Großflugzeugs geeignet ist.

Weitere Merkmale und Vorteile der Erfindung ergeben sich aus der folgenden Beschreibung von bevorzugten Ausführungsbeispielen der Erfindung, bei der Bezug genommen wird auf die beigefügte Zeichnung.
Fig. 1 zeigt in perspektivischer Ansicht ein mit einem vernähten Kernverbund gebildetes Schalensegment für eine Flugzeugrumpfsektion.
Fig. 2 zeigt schematisch einen Schnitt durch den Kernverbund nach Fig. 1 mit eingebrachter Kernfüllmasse und symbolisiertem Nahtverlauf.
Fig. 3 zeigt eine prinzipielle Darstellung des Nähvorgangs mit einer Rundnadel.
Fig. 4 zeigt eine alternative Ausgestaltung eines Faltwabenkerns mit angefalteten Flanschen.

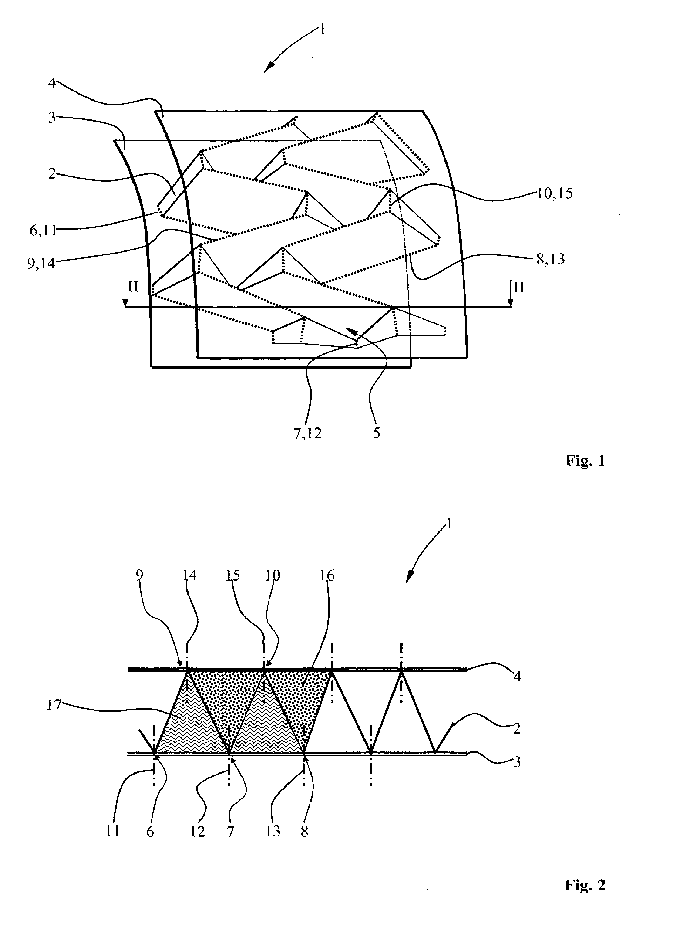

Die Fig. 1 zeigt in perspektivischer Ansicht ein mit einem nach dem erfindungsgemäßen Verfahren vernähten Kernverbund gebildetes Schalensegment zur Herstellung einer Flugzeugrumpfsektion.

Ein Kernverbund 1 ist unter anderem mit einem Faltwabenkern 2 gebildet, auf den eine untere und eine obere Deckschicht 3, 4 aufgebracht sind. Der Faltwabenkern 2 verfügt über eine Vielzahl von durchgehenden, drainagefähigen Kanälen, die jeweils entsprechend einem zickzackförmig verlaufenden Kanal 5 ausgestaltet sind. Der Faltwabenkern 2 ist nach unten durch drei Basislinien 6 bis 8 begrenzt, während die beiden Scheitellinien 9, 10 den Faltwabenkern 2 nach oben begrenzen. Sowohl die Basislinien 6 bis 8 als auch die Scheitellinien 9, 10 verlaufen in zickzackförmigen Wiederholungseinheiten, können aber beispielsweise auch trapezförmig, angenähert rechteckförmig oder sinusförmig verlaufen. Der Faltwabenkern 2 setzt sich in allen Zeichnungsrichtungen weiter fort. Der Kernverbund 1 weist im Ausführungsbeispiel der Fig. 1 eine annähernd einfach gekrümmte (hohlzylindrische) räumliche Gestalt auf, kann aber auch zweifach (sphärisch) gekrümmt oder als eine ebene Platte ausgebildet sein.

Die Deckschichten 3, 4 sind beispielsweise mit einem Kohlefasergewebe oder Kohlefasergelege gebildet und mit einem Epoxidharz infiltriert. Der Faltwabenkern 2 ist vorzugsweise mit Nomex^{®}-Papier gebildet, kann zum Beispiel aber auch mit einer beliebigen Kohlefaserverstärkungsanordnung (Gewebe, Gelege) hergestellt sein, das mit einem aushärtbaren duroplastischen Kunststoffmaterial, wie einem Epoxidharz, einem Polyesterharz, einem Phenolharz oder einem BMI-Harz imprägniert ist. Durch das erfindungsgemäße Verfahren sind beide Deckschichten 3, 4 entlang der Basislinien 6 bis 8 sowie der Scheitellinien 9, 10 mit dem Faltwabenkern, wie durch die punktierten Linien angedeutet vernäht. Der Faltwabenkern 2 ist zur Schaffung der gezeigten räumlichen Struktur jeweils entlang der Basis- und der Scheitellinien 6 bis 10 entgegen gerichtet gefaltet. Hierdurch entstehen drei Basisnähte 11 bis 13 und zwei Scheitelnähte 14 und 15 im Bereich der Basis- bzw. Scheitellinien 6 bis 10. Vorzugsweise sollte für den Nähfaden dasselbe Material zum Einsatz kommen, das auch als Verstärkungsfaser innerhalb der Deckschichten 3,4 und des Faltwabenkerns 2 dient. Hierdurch wird eine gute Verankerung des Nähfadens in der Harzmatrix der Deckschichten 3, 4 erzielt.

Infolge der Vernähung der Deckschichten 3, 4 mit dem Faltwabenkern 2 ist eine fortschreitende Delamination der Deckschichten 3, 4 vom Faltwabenkern 2 - wie sie bei einer reinen Klebeverbindung auftreten kann - nahezu ausgeschlossen. Die Basislinien 6 bis 8 und die Scheitellinien 9, 10 brauchen nicht durchgehend mit dem Faltwabenkern 2 vernäht zu werden. In der Regel ist eine punktuelle Vernähung in einem gleichmäßigen quadratischen Rasterabstand von beispielsweise 10 cm über die Gesamtfläche des Kernverbundes 1 hinweg ausreichend, um der Gefahr einer bereichsweisen Ablösung der Deckschichten 3, 4 vom Faltwabenkern 2 sicher zu begegnen. Hierdurch kann der Kernverbund 1 unbesehen als Strukturbauteil, zum Beispiel als ein Schalensegment zur Bildung einer Rumpfsektion für ein Großflugzeug herangezogen werden.

Anhand der Fig. 2, die einen schematischen Schnitt durch einen verlängert dargestellten Kernverbund nach Maßgabe der Fig. 1 mit bereits teilweise eingebrachter Kernfüllmasse illustriert, soll der Ablauf des Verfahrens näher dargelegt werden.

Im ersten Verfahrensschritt a) wird eine Kernfüllmasse 16, 17 in die Kanäle des Faltwabenkerns 2 eingebracht. Bei der Kernfüllmasse 16, 17 handelt es sich um ein aushärtendes Material, das nach der Fertigstellung des Kernverbundes 1 wieder rückstandslos aus diesem entfernt werden kann. Als Kernfüllmasse 16, 17 kann beispielsweise das Material AquaCore^{®} dienen, das durch gewöhnliches Wasser als Lösungsmittel wieder aus dem Faltwabenkern 2 heraus gespült werden kann. Demzufolge verbleiben im Kernverbund keinerlei gewichtserhöhende Bestandteile.

Im anschließenden Verfahrensschritt b) wird die anfänglich noch "trockene" untere und obere Deckschicht 3, 4 auf dem Faltwabenkern 2 positioniert, das heißt noch nicht vernäht. Der Begriff "trocken" meint in diesem Kontext, dass die Verstärkungsfaseranordnung der Deckschichten 3, 4, bei dem es sich beispielsweise um ein Kohlefasergewebe oder ein Kohlefasergelege handelt, noch nicht mit dem aushärtbaren Kunststoffmaterial durchtränkt ist. In diesem Verfahrensstadium kann - solange die Kernfüllmasse 16, 17 noch nicht vollständig erhärtet ist - dem herzustellenden Kernverbund 1 eine von der gezeigten ebenen Gestalt abweichende, vorgegebene Sollgeometrie gegeben werden, an die wiederum die räumliche Form des Faltwabenkerns 2 bereits herstellerseitig angepasst ist. Dies kann beispielsweise durch einen entsprechend geformten Auflagetisch und/oder eine der Sollgeometrie entsprechende Andruckplatte zur Formung bzw. mechanischen Unterstützung der Faltwabenkernstruktur 2 geschehen. Durch die Kernfüllmasse 16, 17 ist sichergestellt, dass durch den sich anschließenden mechanischen Anbindungsvorgang der Deckschichten 3, 4 an den Faltwabenkern 2 keine undefinierte Verformung des Faltwabenkerns 2 erfolgen kann.

Nachdem die Kernfüllmasse 16, 17 im Faltwabenkern vollständig erhärtet ist, erfolgt im Verfahrensschritt c) die zumindest bereichsweise mechanische Anbindung der Deckschichten 3, 4 an den Faltwabenkern 2, die bevorzugt durch konventionelles Vernähen der genannten Komponenten erfolgt. Das Vernähen erfolgt zum Beispiel durch einen nicht dargestellten, frei im Raum positionierbaren Nähkopf mit mindestens einer Rundnadel zur Aufnahme eines geeigneten Nähfadens. Der Faltwabenkern 2 wird vorzugsweise im Bereich der Scheitellinien 9, 10 sowie der Basislinien 6 bis 8, wie durch die senkrechten, strichpunktiert dargestellten Basis- bzw. Scheitelnähte 11 bis 15 veranschaulicht, mit den beiden Deckschichten 3, 4 vernäht. Hierbei ist es ausreichend, eine lediglich bereichsweise Vernähung zwischen dem Faltwabenkern 2 und den Deckschichten 3, 4 vorzunehmen.

Nachdem das Vernähen des Faltwabenkerns 2 mit den beiden Deckschichten 3, 4 beendet ist, erfolgt im Verfahrensschritt d) die Infusion des Kernverbundes 1 mit einem aushärtbaren Kunststoffmaterial, beispielsweise einem Epoxidharz, mittels eines herkömmlichen Harzinfusionsprozesses unter Anwendung von Vakuum. Hierbei wird zugleich der Nähfaden mit durchtränkt, wodurch sich ein mechanisch extrem belastbarer Verbund zwischen den Deckschichten 3, 4 und dem Faltwabenkern 2 einstellt. Hierdurch wird insbesondere eine fortschreitende Delamination der Deckschichten 3, 4 vom Faltwabenkern 2 auch unter extremen Lastbedingungen im Flugbetrieb ausgeschlossen. Die Harzinfusion des Kernverbundes 1 kann beispielsweise unter Verwendung einer Folie zur Abdeckung erfolgen, die zur Beschleunigung und Vergleichmäßigung des Infiltrationsvorgangs mit einem ausreichenden Unterdruck beaufschlagt wird.

Anschließend erfolgt im Verfahrensschritt e) die Aushärtung des Gesamtaufbaus unter gleichzeitiger Anwendung von Druck und/oder Temperatur, was beispielsweise in einem herkömmlichen Ofen oder in einem Autoklaven geschehen kann.

Zur Fertigstellung des Kernverbundes 1 wird im letzten Verfahrensschritt f) die Kernfüllmasse 16, 17 aus sämtlichen Hohlräumen bzw. Kanälen des Faltwabenkerns 2 entfernt. Für den Fall, dass als Kernfüllmasse 16, 17 eine wachsartige Substanz oder eine niedrigschmelzende Metalllegierung eingesetzt wird, kann das Entfernen der Kernfüllmasse 16, 17 auch durch Erwärmen und selbständiges Herausfließen durch die Wirkung der Schwerkraft erfolgen. Um den Prozess durch die Wirkung von Zentrifugalkräften zu beschleunigen, kann der Kernverbund unter Umständen auch in schnelle Rotation versetzt werden.

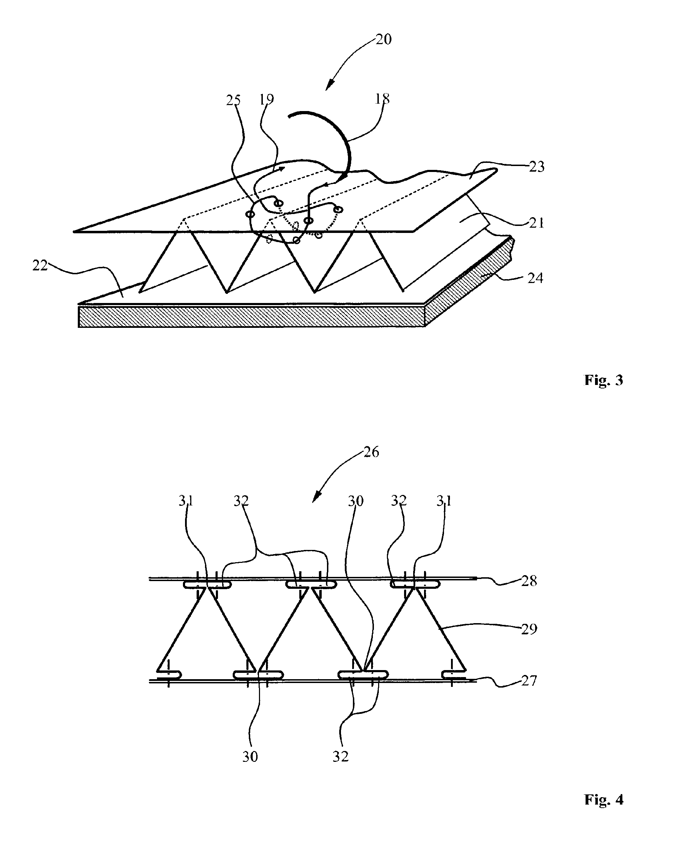

Die Fig. 3 veranschaulicht den prinzipiellen Ablauf des Nähvorgangs mit einer Rundnadel.

Eine Rundnadel 18 ist an einem nicht dargestellten Nähkopf verschwenkbar angelenkt. Die Rundnadel 18 dient zur Führung eines Nähfadens 19 und der Penetration des Kernverbundes. Die Rundnadel 18 ist mittels einer Vielzahl von nicht dargestellten Aktuatoren in mindestens sechs Achsen im Raum positionierbar, wobei die Aktuatoren von einer Steuer- und Regeleinrichtung kontrolliert werden. Hierdurch kann die Bewegung der Rundnadel 18 analog zum einseitigen Handnähvorgang erfolgen.

Ein Kernverbund 20 umfasst einen Faltwabenkern 21, der beidseitig mit parallel zueinander verlaufenden Deckschichten 22, 23 versehen ist (vgl. Fig.1, 2). Der Faltwabenkern 21 ist für die Durchführung des Nähvorgangs bevorzugt vollständig mit einer geeigneten Kernfüllmasse zur Stabilisierung aufgefüllt, die der besseren zeichnerischen Übersicht wegen nicht dargestellt ist. Der Kernverbund 20 ruht auf einem bevorzugt metallischen, massiven (Form-) Werkzeug 24, um dem Kernverbund 20 eine definierte Geometrie zu verleihen. Das Werkzeug 24, das im gezeigten Ausführungsbeispiel eine ebene geometrische Gestalt aufweist, kann alternativ auch ein- oder zweidimensional (sphärisch) gekrümmt ausgestaltet sein. Das Werkzeug ist bei einer hinreichenden Eigensteifigkeit des durch die Kernfüllmasse zumindest bereichsweise ausgefüllten Faltwabenkerns nicht notwendig.

Nachdem die Rundnadel 18 mit dem Nähfaden 19 die obere Deckschicht 23 einschließlich Faltwabenkern 21 an jeweils zwei Einstichstellen durchstoßen hat - wie durch die kleinen Ellipsen bzw. Kreise symbolisiert - und aus der oberen Deckschicht 23 vollständig herausgetreten ist, wird die Rundnadel 18 mittels einer geeigneten Halterung am Nähkopf "umgedreht" und penetriert die obere Deckschicht 23 einschließlich des Faltwabenkerns 21 entsprechend, nur in umgekehrter Richtung, bis die Rundnadel 18 wieder vollkommen aus dem Kernverbund 20 unter Bildung von vier weiteren, ebenfalls durch Ellipsen dargestellten Einstichstellen im Faltwabenkern 21 und in der oberen Deckschicht 23 herausgetreten ist. Hierbei bildet sich eine Schlaufe 25 oberhalb der Deckschicht 23, durch die der Nähfaden 19 geführt und mittels der Nadel 18 abschließend festgezogen wird. Die Haltbarkeit der resultierenden Naht vor dem Imprägnieren der Deckschichten 22, 23 kann im Bedarfsfall durch eine adhäsive Beschichtung des Nähfadens 19 verbessert werden. Die Durchlaufrichtung des Nähfadens 19 durch den Kernverbund 20 wird durch die beiden endseitigen Richtungspfeile am Nähfaden 19 veranschaulicht.

Dieser Schlaufenbildungsvorgang wird periodisch solange wiederholt, bis die Vernähung entlang der Scheitellinien des Faltwabenkerns 21 vollständig abgeschlossen ist, wobei der Nähkopf entlang einer vorgegebenen Bahn geführt wird. Der Nähprozess wird zumindest abschnittsweise an den restlichen Scheitellinien fortgesetzt. Die Vernähung der Basislinien des Faltwabenkerns 21 mit der unteren Deckschicht 22 kann bei diesen Nähverfahren erst nach dem Umdrehen des Kernverbundes auf dem Werkzeug 24 erfolgen. Der vorstehend exemplarisch dargestellte Nähprozess ist nur ein möglicher von vielen alternativen Nahtbildungsarten.

Anstatt der Rundnadel 18 kann auch eine herkömmliche gerade Nadel eingesetzt werden. In diesem Fall werden beide Deckschichten 22, 23 nacheinander durchstoßen, wobei der Nähfaden 19 jeweils in etwa senkrecht zwischen den Deckschichten 22, 23 verläuft und einmal den Faltwabenkern 21 in einem Bereich zwischen den Scheitellinien und den Basislinien, das heißt im Bereich der schräg stehenden Flanken des Faltwabenkerns 21 durchstößt. Letztlich kann der Faltwabenkern 21 im Bereich der Scheitellinien sowie der Basislinien zusätzlich zumindest abschnittsweise mit den Deckschichten 22, 23 verklebt werden. In dieser Verfahrensvariante wird zwischen dem unterstützenden Werkzeug und dem Kernverbund 20 eine mit einem Elastomer gebildete Zwischenschicht (Gummimatte) unterhalb des Kernverbundes 20 angeordnet, um eine Beschädigung der auch die untere Deckschicht 22 durchstoßenden Nadel durch das darunter liegende Werkzeug 24 zu verhindern.

In der Fig. 4 ist eine alternative Ausführungsvariante eines Faltwabenkerns mit Flanschen zum Annähen an die Deckschichten des Kernverbundes dargestellt.

Ein Kernverbund 26 umfasst zwei Deckschichten 27, 28, die einen Faltwabenkern 29 beidseitig bedecken. Im Unterschied zu den vorangegangenen Faltwabenkernen weist der Faltwabenkern 29 jeweils im Bereich von Basislinien 30 sowie Scheitellinien 31 einen sich nach beiden Seiten horizontal gleichmäßig erstreckenden Flansch 32 auf. Die Flansche 32 werden während des Herstellungsprozesses des Faltwabenkerns 29 durch wiederholtes Falten erzeugt. Durch die Flansche 32 wird die zwischen den Deckschichten 27, 28 und dem Faltwabenkern 29 zur Verfügung stehende Anbindungsfläche bzw. Verbindungsfläche vergrößert, was insbesondere für eine zusätzlich erfolgende Verklebung und/oder Vernähung von Vorteil ist.

Darüber hinaus ermöglichen die Flansche 32, dass auf beiden Seiten der Basislinien 30 bzw. der Scheitellinien 31 eine Vernähung, wie durch die senkrecht verlaufenden strichpunktierten Linien angedeutet, erfolgen kann, wodurch die mechanische Belastbarkeit der erfindungsgemäß durch Vernähen erfolgenden Verbindung zwischen dem Faltwabenkern 29 und den Deckschichten 27, 28 weiter verbessert wird.

### Bezugszeichenliste

- 1: Kernverbund (einfach gekrümmt)
- 2: Faltwabenkern
- 3: untere Deckschicht
- 4: obere Deckschicht
- 5: Kanal (durchgehend, drainagefähig)
- 6: Basislinie
- 7: Basislinie
- 8: Basislinie
- 9: Scheitellinie
- 10: Scheitellinie
- 11: Basisnaht
- 12: Basisnaht
- 13: Basisnaht
- 14: Scheitelnaht
- 15: Scheitelnaht
- 16: Kernfüllmasse
- 17: Kernfüllmasse
- 18: Rundnadel (verschwenkbar)
- 19: Nähfaden
- 20: Kernverbund
- 21: Faltwabenkern
- 22: untere Deckschicht
- 23: obere Deckschicht
- 24: Werkzeug (Auflagefläche zur Unterstützung)
- 25: Schlaufe
- 26: Kernverbund
- 27: untere Deckschicht
- 28: obere Decksicht
- 29: Faltwabenkern
- 30: Basislinie
- 31: Scheitellinie
- 32: Flansch

## Patentansprüche

1. Verfahren zur Herstellung eines Kernverbundes (1, 20, 26) mit einem beidseitig mit Deckschichten (3, 4, 22, 23, 27, 28) versehenen Faltwabenkern (2, 21, 29), wobei der Faltwabenkern (2, 21, 29) eine Vielzahl von parallel zu den Deckschichten (3, 4, 22, 23, 27, 28) verlaufende drainagefähige Kanäle (5) aufweist, mit den Schritten:
a) Abkanten von Scheitellinien (6 - 10) des Faltwabenkerns (2, 21, 19), so dass sich im wesentlichen horizontal verlaufende Flansche (32) an den Scheitellinien des Faltwabenkerns ergeben,
b) Zumindest bereichsweises Einbringen einer Kernfüllmasse (16, 17) in den mindestens einen Faltwabenkern (2, 21, 29),
c) Anordnen einer unteren und einer oberen trockenen Deckschicht (3, 4, 22, 23, 27, 28) auf den Faltwabenkern (2, 21, 29),
d) zumindest bereichsweises mechanisches Anbinden der Deckschichten (3, 4, 22, 23, 27, 28) an den Flanschen (32) des Faltwabenkerns (2, 21, 29),
e) Infusion der Deckschichten (3, 4, 22, 23, 27, 28) mit einem aushärtbaren Kunststoffmaterial,
f) Aushärten des gesamten Kernverbundes (1, 20, 26) unter Anwendung von Druck und/oder Temperatur, und
g) Entfernen der Kernfüllmasse (16, 17).

2. Verfahren nach Patentanspruch 1, **dadurch gekennzeichnet, dass** dem Kernverbund (1, 20, 26) mittels mindestens eines Werkzeugs (24) vor dem Anbinden der Deckschichten (3, 4, 22, 23, 27, 28) eine von einer ebenen Gestalt abweichende Geometrie verliehen wird.

3. Verfahren nach Patentanspruch 1 oder 2, **dadurch gekennzeichnet, dass** das mechanische Anbinden der Deckschichten (3, 4, 22, 23, 27, 28) an den Faltwabenkern (2, 21, 29) durch Vernähen erfolgt.

4. Verfahren nach einem der vorangehenden Patentansprüche, **dadurch gekennzeichnet, dass** zumindest eine Deckschicht (3, 4, 22, 23, 27, 28) zumindest bereichsweise mit dem Faltwabenkern (2, 21, 29) verklebt wird.

5. Verfahren nach einem der vorangehenden Patentansprüche, **dadurch gekennzeichnet, dass** das Vernähen und/oder das Verkleben im Wesentlichen entlang von Basislinien (6-8) und/oder von Scheitellinien (9, 10) des Faltwabenkerns (2, 21, 29) erfolgt.

6. Verfahren nach einem der vorangehenden Patentansprüche, **dadurch gekennzeichnet, dass** dem Kernverbund (1, 20, 26) eine im Wesentlichen schalensegmentförmige Geometrie zur Bildung einer zusammengesetzten Flugzeugrumpfsektion gegeben wird.

7. Verfahren nach einem der vorangehenden Patentansprüche, **dadurch gekennzeichnet, dass** dem Kernverbund (1, 20, 26) eine im Wesentlichen hohlzylindrische Geometrie zur Bildung einer einstückigen Flugzeugrumpfsektion gegeben wird.

8. Verfahren nach einem der vorangehenden Patentansprüche, **dadurch gekennzeichnet, dass** der Faltwabenkern (2, 21, 29) mit einem ausgehärteten Kunststoffmaterial imprägniert und mit einer vielfach gefalteten Verstärkungsanordnung gebildet ist.

9. Verfahren nach einem der vorangehenden Patenansprüche, **dadurch gekennzeichnet, dass** die Kernfüllmasse (16, 17) durch Schmelzen oder Auflösen mittels eines Lösungsmittels aus dem Faltwabenkern (2, 21, 29) entfernt wird.

10. Verfahren nach einem der vorangehenden Patentansprüche, **dadurch gekennzeichnet, dass** die Deckschichten (3, 4, 22, 23, 27, 28) mit einer flächenhaften Verstärkungsfaseranordnung, insbesondere einem Kohlefasergewebe und/oder einem Kohlefasergelege gebildet sind und die Infusion der Deckschichten (3, 4, 22, 23, 27, 28) mit einem Epoxidharz, insbesondere in einem Vakuumprozess erfolgt.

11. Kernverbund (1, 20, 26), insbesondere nach einem der vorangehenden Patentansprüche hergestellt, mit einem beidseitig mit Deckschichten (3, 4, 22, 23, 27, 28) versehenen Faltwabenkern (2, 21, 29), wobei der Faltwabenkern (2, 21, 29) parallel zu den Deckschichten (3, 4, 22, 23, 27, 28) verlaufende drainagefähige Kanäle (5) aufweist,
**dadurch gekennzeichnet, dass**
der Faltwabenkern (2, 21, 29) Basislinien und Scheitellinien (6 - 10) mit im wesentlichen nach beiden Seiten gleichmäßig horizontal verlaufenden Flanschen (32) aufweist und die Deckschichten (3, 4, 22, 23, 27, 28) zumindest abschnittsweise an den Flanschen (32) mit dem Faltwabenkern (2, 21, 29) mechanisch verbunden, insbesondere vernäht, sind.

## Claims

1. A method for manufacturing a core composite (1, 20, 26) having a folded honeycomb core (2, 21, 29) provided on both sides with cover layers (3, 4, 22, 23, 27, 28), wherein the folded honeycomb core (2, 21, 29) comprises a plurality of drainage-enabling channels extending parallel to the cover layers (3, 4, 22, 23, 27, 28), with the steps:
a) folding apex lines (6-10) of the folded honeycomb core (2, 21, 29) so that substantially horizontally extending flanges (32) are formed at the apex lines of the folded honeycomb core,
b) introducing a core filler material (16, 17) at least in some areas into the at least one folded honeycomb core (2, 21, 29),
c) arranging a lower and an upper dry cover layer (3, 4, 22, 23, 27, 28) on the folded honeycomb core (2, 21, 29),
d) mechanically connecting the cover layers (3, 4, 22, 23, 27, 28) at least in some areas to the flanges (32) of the folded honeycomb core (2, 21, 29),
e) infusing the cover layers (3, 4, 22, 23, 27, 28) with a curable plastic material,
f) hardening the entire core composite (1, 20, 26) under the application of pressure and/or temperature, and
g) removing the core filler material (16, 17).

2. The method according to claim 1 **characterized in that** the core composite (1, 20, 26) is provided with a geometry deviating from a flat configuration by means of at least one tool (24) prior to the connecting of the cover layers (3, 4, 22, 23, 27, 28).

3. The method according to claim 1 or claim 2 **characterized in that** the mechanical connection of the cover layers (3, 4, 22, 23, 27, 28) to the folded honeycomb core (2, 21, 29) is effected by stitching.

4. The method according to any of the preceding claims **characterized in that** at least one cover layer (3, 4, 22, 23, 27, 28) is adhesively bonded to the folded honeycomb core (2, 21, 29) at least in some areas.

5. The method according to any of the preceding claims **characterized in that** the stitching and/or adhesive bonding takes place substantially along base lines (6-8) and/or apex lines (9, 10) of the folded honeycomb core (2, 21, 29).

6. The method according to any of the preceding claims **characterized in that** the core composite (1, 20, 26) is provided with a substantially shell segment shaped geometry in order to form a composite aircraft fuselage section.

7. The method according to any of the preceding claims **characterized in that** the core composite (1, 20, 26) is provided with a substantially hollow cylindrical geometry in order to form a one-piece aircraft fuselage section.

8. The method according to any of the preceding claims **characterized in that** the folded honeycomb core (2, 21, 29) is impregnated with a hardened plastic material and is formed with a reinforcement arrangement folded multiple times.

9. The method according to any of the preceding claims **characterized in that** the core filler material (16, 17) is removed from the folded honeycomb core (2, 21, 29) by melting or dissolving by means of a solvent.

10. The method according to any of the preceding claims **characterized in that** the cover layers (3, 4, 22, 23, 27, 28) are formed with an areal reinforcement fiber arrangement, in particular a carbon fiber woven fabric and/or a carbon fiber non-crimp fabric and the infusion of the cover layers (3, 4, 22, 23, 27, 28) is effected with an epoxy resin, in particular in a vacuum process.

11. A core composite (1, 20, 26), in particular according to any of the preceding claims, having a folded honeycomb core (2, 21, 29) provided on both sides with cover layers (3, 4, 22, 23, 27, 28), wherein the folded honeycomb core (2, 21, 29) comprises a plurality of drainage-enabling channels (5) extending parallel to the cover layers (3, 4, 22, 23, 27, 28),
**characterized in that**
the folded honeycomb core (2, 21, 29) comprises base lines and apex lines (6-10) with substantially horizontally extending flanges (32), and the cover layers (3, 4, 22, 23, 27, 28) are mechanically connected, in particular stitched, to the folded honeycomb core (2, 21, 29) at the flanges (32) at least in some sections.

## Revendications

1. Procédé pour la fabrication d'une structure composite de noyau (1, 20, 26) avec un noyau pliable en nid d'abeille (2, 21, 29) pourvu des deux côtés de couches de recouvrement (3, 4, 22, 23, 27, 28), le noyau pliable en nid d'abeille (2, 21, 29) présentant une multitude de canaux capables de drainage (5) parallèlement aux couches de recouvrement (3, 4, 22, 23, 27, 28) avec les étapes :
a) pliage de lignes de sommet (6-10) du noyau pliable en nid d'abeille (2, 21, 29) si bien qu'il résulte des brides substantiellement dans le sens horizontal (32) sur les lignes de sommet du noyau pliable en nid d'abeille,
b) introduction au moins par endroits d'une masse de remplissage du noyau (16, 17) dans le noyau pliable en nid d'abeille qui existe au moins (2, 21, 29),
c) disposition d'une couche de recouvrement inférieure et d'une couche de recouvrement supérieure (3, 4, 22, 23, 27, 28) sur le noyau pliable en nid d'abeille (2, 21, 29),
d) liaison mécanique au moins par endroits des couches de recouvrement (3, 4, 22, 23, 27, 28) aux brides (32) du noyau pliable en nid d'abeille (2, 21, 29),
e) perfusion des couches de recouvrement (3, 4, 22, 23, 27, 28) avec une matière plastique durcissable,
f) durcissement de l'ensemble de la structure composite de noyau (1, 20, 26) en appliquant de la pression et/ou de la température et
g) enlèvement de la masse de remplissage du noyau (16, 17).

2. Procédé selon la revendication 1, **caractérisé en ce qu'**une géométrie qui diffère d'une configuration plane est conférée à la structure composite de noyau (1, 20, 26) au moyen d'au moins un outil (24) avant la liaison des couches de recouvrement (3, 4, 22, 23, 27, 28).

3. Procédé selon la revendication 1 ou 2, caractérisé en ce la liaison mécanique des couches de recouvrement (3, 4, 22, 23, 27, 28) au noyau pliable en nid d'abeille (2, 21, 29) se fait par couture.

4. Procédé selon l'une des revendications précédentes, **caractérisé en ce qu'**au moins une couche de recouvrement (3, 4, 22, 23, 27, 28) est collée au moins par endroits au noyau pliable en nid d'abeille (2, 21, 29).

5. Procédé selon l'une des revendications précédentes, **caractérisé en ce que** la couture et/ou le collage se fait substantiellement le long de lignes de base (6-8) et/ou de lignes de sommet (9, 10) du noyau pliable en nid d'abeille (2, 21, 29).

6. Procédé selon l'une des revendications précédentes, **caractérisé en ce qu'**une géométrie substantiellement en forme de segment de coque est donnée à la structure composite de noyau (1, 20, 26) pour former une section de fuselage d'avion composée.

7. Procédé selon l'une des revendications précédentes, **caractérisé en ce qu'**une géométrie substantiellement en cylindre creux est donnée à la structure composite de noyau (1, 20, 26) pour former une section de fuselage d'avion en une pièce.

8. Procédé selon l'une des revendications précédentes, **caractérisé en ce que** le noyau pliable en nid d'abeille (2, 21, 29) est imprégné d'une matière plastique durcie et est formé avec un arrangement de renforcement plié plusieurs fois.

9. Procédé selon l'une des revendications précédentes, **caractérisé en ce que** la masse de remplissage du noyau (16, 17) est enlevée du noyau pliable en nid d'abeille (2, 21, 29) par fusion ou dissolution au moyen d'un solvant.

10. Procédé selon l'une des revendications précédentes, **caractérisé en ce que** les couches de recouvrement (3, 4, 22, 23, 27, 28) sont formées avec un arrangement plat de fibres de renforcement, en particulier un tissu en fibres de carbone et/ou une nappe de fibres de carbone, et la perfusion des couches de recouvrement (3, 4, 22, 23, 27, 28) se fait avec une résine époxy, en particulier dans un processus sous vide.

11. Structure composite de noyau (1, 20, 26), en particulier selon l'une des revendications précédentes, avec un noyau pliable en nid d'abeille (2, 21, 29) pourvu des deux côtés de couches de recouvrement (3, 4, 22, 23, 27, 28), le noyau pliable en nid d'abeille (2, 21, 29) présentant une multitude de canaux capables de drainage (5) parallèlement aux couches de recouvrement (3, 4, 22, 23, 27, 28), **caractérisée en ce que** le noyau pliable en nid d'abeille (2, 21, 29) présente des lignes de base et des lignes de sommet (6-10) avec des brides (32) substantiellement horizontalement de manière régulière des deux côtés et les couches de recouvrement (3, 4, 22, 23, 27, 28) sont reliées mécaniquement, en particulier sont cousues, au moins par endroits par les brides (32) au noyau pliable en nid d'abeille (2, 21, 29).
